# EUROPÄISCHE PATENTSCHRIFT

(11) **EP 1 212 596 B1**
(45) Veröffentlichungstag und Bekanntmachung des Hinweises auf die Patenterteilung: **29.10.2003**
(21) Anmeldenummer: 00991971.3
(22) Anmeldetag: 31.08.2000
(51) Int. Cl.: G01M 11/04

(54) **OPTISCHE BANK**
OPTICAL BANK
BANC OPTIQUE

(30) Priorität: 13.09.1999 DE 19943870
(43) Veröffentlichungstag der Anmeldung: 12.06.2002
(73) Patentinhaber: Carl Zeiss, 89518 Heidenheim (Brenz) (DE)
(72) Erfinder: SCHÖPPACH, Armin, 73431 Aalen (DE); KAUFMANN, Paul, 73433 Aalen (DE); MÜNKER, Hartmut, 73431 Aalen (DE)
(86) Internationale Anmeldenummer: EP0008482
(87) Internationale Veröffentlichungsnummer: WO01036932

(56) Entgegenhaltungen:
- DE-A- 3 246 358
- US-A- 5 530 547
- US-A- 5 781 355

## Beschreibung

Die Erfindung betrifft eine optische Bank.
Aus der US 5,781,355 ist eine Lagerung für einen Spiegel bekannt. Diese Lagerung weist eine Grundplatte auf, die mit einem Spiegelträger über eine Ausgleichsstruktur verbunden ist. Diese Ausgleichsstruktur ist ein filligranes Gebilde mit Drohgelenken, die über Stäben mit Mittelteilen gelenkig verbünden sind, wobei die Grundplatte und die Trägerplatte über senkrecht angeordnete Stäbe mit der parallel zur Grund- und Trägerplatte angeordneten Ausgleichsstrukturen mit derselben verbunden sind. Die Ausgleichsstruktur kompensiert die temperaturbedingten unterschiedlichen Ausdchnungen von Grund- und Trägerplatte durch elastische Verformung.

Aus der DE 32 46 358 A 1 ist eine Vorrichtung zum spielfreien vertikalen Verschieben von Objekten bekannt. Diese Vorrichtung weist annähernd parallel zueinander angeordnete Platten auf, die jeweils über ein Festkörpergelenk miteinander verbunden sind. Weiterhin ist die zweite und dritte Platte jeweils mit einer die Platte durchdringenden Schraube versehen, die sich auf der jeweils darunterliegenden Platte abstützt. Durch die jeweilige Schraube und das Festkörpergelenk stützt sich die jeweilige Platte auf der darunterliegenden Platte ab. Durch Drehen der Schraube ist ein gewünschter Kippwinkel der jeweiligen Platte einstellbar. In der obersten Platte ist eine Einkerbung ausgebildet, die für die Aufnahme des zu verschiebenden Objektes, vorgesehen ist.

Aus der EP 844 473 A1 ist eine optische Bank bekannt, die eine Grundplatte aufweist. Diese Grundplatte ist mit Aufnahmen, die mit zugeordneten optischen Einheilen in Verbindung stehen, versehen. Die Achsen der optischen Einheiten sind parallel zueinander und senkrecht zu der Grundplatte der optischen Bank angeordnet.

Nachteilig ist hei dieser optischen Bank, dass aufgrund der senkrechten Anordnung der Achsen der optischen Einheiten zur Grundplatte diese Bankstruktur einen großen Bauraum beansprucht. Weiterhin ist nachteilig, dass durch die angrenzende Anordnung von Aufnahmeteilen und Grundplatte aufgrund von Temperaturschwankungen bzw. aufgrund eines in der Grundplatte auftretenden Temperaturgradienten Spannungen entstehen, wobei die aus den Spannungen resultierenden Deformationen auf die angrenzend angeordneten Aufnahmen übertragen werden.

Es lag der Erfindung die Aufgabe zugrunde eine optische Bank zu schaffen, die kompakt aufgebaut ist.

Weiterhin lag der Erfindung die Aufgabe zugrunde eine optische Bank bereitzustellen, bei der der Einfluss von thermischen Schwankungen auf die relative Anordnung der optischen Einheiten zueinander vermindert ist.

Die Aufgabe der Erfindung wird durch die im Patentanspruch 1 gegebenen Merkmale gelöst. Durch die Maßnahme eine optische Bank mit einer Grundplatte zu schaffen, die eine Aufnahme aufweist, die mittels zugeordneter Verbindungselemente gegenüber der

Grundplatte in ihrer Gesamtheit relativ bewegbar zu derselben angeordnet ist, ist eine optische Bank bereitgestellt, bei der in der Grundplatte auftretenden Spannungen nicht oder zumindestens nur in geringem Maße auf die als Hohlkörper aus gebildete Aufnahme übertragen werden. Die Spannungen werden in eine relative Deformation von Grundplatte zur Aufnahme überführt. Dadurch wirken diese Spannungen nicht auf die Aufnahme, womit die an der Aufnahme gelagerten optischen Einheiten ihre relative Anordnung zueinander nicht ändern.

Es hat sich als vorteilhaft herausgestellt die relative Deformation von Aufnahmeelement und Grundplatte durch Verbindungselemente bereitzustellen, die vorzugsweise Federn umfassen. Als Federn haben sich Blattfedern als besonders geeignet herausgestellt.

Es könnten jedoch auch Verbindungselemente, die Gelenkverbindungen umfassen, vorgesehen sein. Diese Gelenkverbindungen sollten eine relative Bewegung von Grundplatte zu Aufnahme nur unter Einwirkung einer vorbestimmten Mindestkraft erlauben, so daß die Übertragung von Vibrationen von der Grundplatte auf die Aufnahme unterbunden ist.

Es hat sich als vorteilhaft herausgestellt als Aufnahme einen monolithischen Körper, der mit Innenbohrungen für eine Strahlführung ausgebildet ist, vorzusehen. Bei Verwendung eines monolithischen Körpers ist eine hohe Formstabilität und homogene Temperaturverteilung erreichbar.

Weiterhin hat es sich als vorteilhaft herausgestellt für die Aufnahme einen gehäuseartigen Hohlkörper mit Öffnungen zum Ankoppeln von optischen Einheiten vorzusehen. Durch das Vorsehen eines gehäuseartigen Hohlkörpers als Aufnahme kann das Gewicht reduziert werden. Auch kann sich die Verwendung einer mehrteiligen gehäuseartigen Aufnahme vorteilhaft auf die Herstellkosten, insbesondere Materialkosten auswirken, da damit die Aufnahme nicht aus einem massiven Materialklotz herzustellen ist.

Es hat sich als vorteilhaft herausgestellt, daß die Aufnahme ein Material aufweist, das ein hohes Verhältnis von Wärmeleitfähigkeit zu Wärmeausdehnungskoeffizient aufweist Durch eine hohe Wärmeleitfähigkeit wird der Ausbildung eines Temperaturgradienten in der Aufnahme entgegengewirkt, aus denen Spannungen und eine Deformation der Aufnahme resultieren könnte. Aufgrund eines geringen Wärmeausdehnungskoeffizienten sind die aus Temperaturschwankungen resultierenden Änderungen der Abmessungen gering, so daß sich die relative Anordnung der mit der Aufnahme verbundenen optischen Einheiten, wenn überhaupt, nur geringfügig ändert. Deformationen aufgrund eines Temperaturgradienten bewirken oftmals ein Verziehen des jeweiligen Bauteils. Aus einem Verziehen resultiert eine Zerstörung von zunächst bestehenden Parallelitäten , was gravierende Auswirkungen auf ein optisches System haben kann. Insbesondere ein Verziehen der Aufnahme ist aus diesem Grund besonders kritisch.

Es hat sich ein keramischer Werkstoff, vorzugsweise Zerodur, für die Aufnahme als besonders vorteilhaft herausgestellt. Bei kompakter Ausbildung der Aufnahme ist die Aufnahme aufgrund ihrer Abmessungen widerstandsfähig gegen Startbelastungen, so daß eine Keramik als Material für die Aufnahme eingesetzt werden kann, wobei eine akzeptable Lebensdauer der Aufnahme gewährleistet werden kann..

Es hat sich weiterhin als vorteilhaft herausgestellt die Grundplatte zumindestens teilweise aus einem Metall herzustellen, um eine Beständigkeit gegenüber auftretenden hohen Startbelastungen, sofern der Einsatz der optischen Bank in einem Satellitensystem vorgesehen ist, gewährleisten zu können. Insbesondere die gegenüber der Aufnahme größeren Abmessungen der Grundplatte erfordern eine größere Stabilität aufgrund der auf diese wirkende Startbelastung.

Es hat sich als vorteilhaft herausgestellt die Grundplatte dreiecksförmig mit einem mittig angeordneten Durchbruch und Flanschsegmenten auszubilden, wobei die Grundplatte mittels der Flanschsegmente mit einem zugeordneten Bauteil fest verbindbar ist, insbesondere kann mittels der Flanschsegmente die optische Bank mit einem optischen Kopf eines zugeordneten Satelliten verbunden werden. Die Ausbildung der Grundplatte in Form eines Dreiecks ist zur Reduzierung des Eigengewichtes vorteilhaft.

Es hat sich als vorteilhaft herausgestellt die Grundplatte zur Bildung einer Haltestruktur mit Verstärkungen auszubilden, die vorzugsweise in Form von Rippen ausgestaltet sind, wobei die Grundplatte Abstützpunkte für die Ankppplung eines Teleskopes aufweist. Solch eine Haltestruktur kann einteilig, insbesondere aus Aluminium zur Gewichtsreduzierung ausgebildet sein.

Zur Gewährleistung einer gleichmäßigen Temperaturverteilung innerhalb der Aufnahme weisen die Verbindungselemente zur Bereitstellung einer vorbestimmten thermischen Kopplung zwischen Grundplatte und Aufnahme einen in Abhängigkeit von ihrem Wärmeleitkoeffizienten vorbestimmten Querschnittt auf. Bei einseitiger Erwärmung der Aufnahme wird durch die geringfügige Abführung von Wärme über die Verbindungselemente ein Wärmestau und aufgrund eines hohen Wärmeleitkoeffizienten des Materials der Aumahme der Ausbildung eines Temperaturgradienten entgegengewirkt.

Es hat sich als vorteilhaft herausgestellt, zusätzlich ein Wärmeleitband vorzusehen, das zumindestens bei einer einen vorbestimmten Temperaturgrenzwert überschreitenden Temperatur der Aufnahme zur Vermeidung einer Überhitzung, insbesondere der optischen Einheiten, zur Wärmeabführung dient.

Es hat sich als vorteilhaft herausgestellt die Empfangseinheit und die Sendeeinheit fest mit der Aufnahme zu verbinden, so daß diese beiden, auf relative Positionsänderungen sensibel reagierenden optischen Einheiten mittels der Aufnahme gelagert sind und somit von Deformationen der Grundplatte entkoppelt sind.

Es hat sich als vorteilhaft herausgestellt, die Grundplatte mit einem Anschluß für eine optische Einheit, vorzugsweise mit Auflagepunkten für die Aufnahme eines Umlenkspiegels, zu versehen. Durch einen Umlenkspiegel, der vorzugsweise für die Justierung des auftreffenden Strahls verstellbar ist, können Richtungsänderungen desselben aufgrund ausgeglichen werden. Somit kann der Umlenkspiegel auf einem Bauteil gelagert sein, das größeren Deformationen aufgrund von Temperaturschwankungen unterworfen ist. Weitere vorteilhafte Maßnahmen sind in weiteren Unteransprüchen beschrieben. Anhand eines Ausführungsbeispiels wird die Erfindung im folgenden näher beschrieben.

Es zeigt:
- Figur 1: Optische Bank; und
- Figur 2: Darstellung der optischen Bank gemäß Figur 1 in einer um 150° gedrehten Richtung und mit der Aufnahme im Aufriß dargestellt.

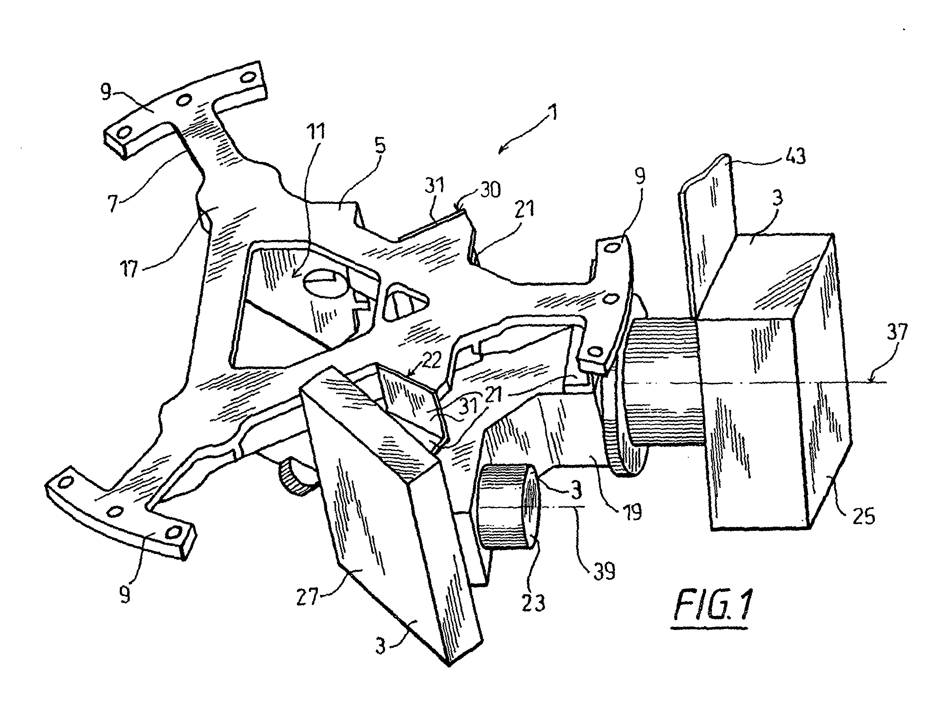

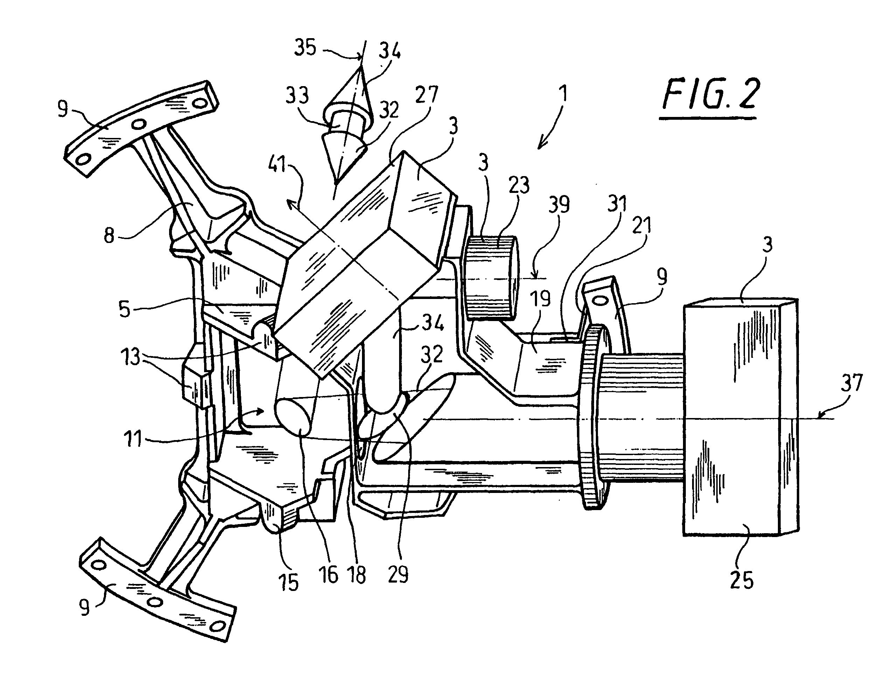

Anhand von Figur 1 und 2 wird zunächst der prinzipielle Aufbau der dargestellten optischen Bank näher beschrieben. Die optische Bank 1 weist eine Grundplatte 7 auf, die mit Verstärkungsrippen 8 versehen ist. Diese Grundplatte 7 ist dreiecksförmig ausgebildet und weist in der Mitte einen Durchbruch 11 auf. Diese dreiecksförmige Grundplatte 7 ist mit Flanschsegmenten an den Ecken der ausgebildet. Weiterhin ist mit der Grundplatte 7 ein Anschluß für ein optisches Element, hier Umlenkspiegel, der auf Auflagepunkten 13 aufliegt, ausgebildet.

Durch die Grundplatte 7 mit den Verstärkungsrippen 8 und dem Anschluß für ein optisches Element 13 wird eine Haltestruktur 5 gebildet. Die Grundplatte 7 weist drei Abstützpunkte 17 für ein Teleskop auf. Mittels des nicht dargestellten Teleskopes kann ein optisches Signal gesendet und empfangen werden. Das Teleskop ist so angeordnet, daß die optische Achse 35 desselben senkrecht zur Grundplatte 7 verläuft, wie in Figur 2 dargestellt. In Fig. 2 ist ein empfangenes Signal bzw. gesendetes Signal durch den Doppelpfeil 33 dargestellt. Die optische Achse 35 ist ebenfalls eingezeichnet.

Ein mittels des Teleskopes empfangenes Signal durchdringt den Durchbruch 11 und wird an einem Umlenkspiegel 16, der mittels der Auflagepunkte 15 gelagert ist, in Richtung einer Aufnahme 19 reflektiert. Diese Aufnahme 19 ist als Hohlkörper ausgebildet und weist eine Öffnung 18 zur Einkopplung des empfangenen Signals 32 auf. Dieses eingekoppelte Signal wird einer Empfangseinheit 25, die eine optische Achse 37 aufweist, und die mit der Aufnahme fest verbunden ist zugeführt. Eine Sendeeinheit 23 mit einer optischen Achse 39, die parallel zur optischen Achse 37 der Empfangseinheit 25 angeordnet ist, ist ebenfalls mit der Aufnahme 19 fest verbunden. Das von der Sendeeinheit 23 abgegebene Signal ist zunächst innerhalb der Aufnahme 19 geführt und wird über einen Umlenkspiegel 27 mit einer Flächennormalen 41, die die optische Achse dieses Umlenkspiegels 27 darstellt, auf einen im Strahlengang zwischen Umlenkspiegel 16 und Empfangseinheit 25 angeordneten selektiv reflektierenden Spiegel 29 reflektiert. Dieser Spiegel 29 ist durchlässig für das empfangene Signal und reflektierend für ein rechtwinklig zum empfangenen Signal auf den Spiegel 29 auftreffendes Signal. Solch eine selektive Reflektivität kann durch unterschiedliche Polarisationen des empfangenen und gesendeten Signals welche mit einer entsprechenden Gitterstruktur des selektiv reflektierenden Spiegels 29 zusammenwirken, bereitgestellt werden. Das von der Sendeeinheit 23 abgegebene Signal verläßt damit ebenfalls durch die Öffnung 18 die Aufnahme 19. Die Aufnahme 19 ist aus Zerodur, einem keramischen Werkstoff mit einer hohen Wärmeleitfähigkeit und einem geringen Wärmeausdehnungskoeffizienten, hergestellt. Die Aufnahme 19 könnte auch als monolithischer Körper der lediglich der Strahlführung von empfangenen und gesendetem Signal 32, 34 entsprechende Innenbohrungen aufweist, ausgebildet sein. Ab dem selektiven Spiegel 29 entspricht der Strahlengang des gesendeten Signals dem Strahlengang des empfangenen Signals, so daß der gesendete Strahl auch über den Umlenkspiegel 27 durch den Durchbruch 11 in der Grundplatte 7 dem Teleskop zugeführt wird. Mittels der Flanschsegmente 9 ist, die Grundplatte mit einem übergeordneten Bauteil, das Bestandteil eines Satelliten ist, fest verbindbar.

Die Aufnahme 19 ist über winklig ausgebildete Federn 30, hier in Form von Blattfedern 31, relativ zur Grundplatte bewegbar mit derselben verbunden. Durch diese relative Bewegbarkeit können auch unterschiedliche Deformationen der einzelnen Bauteile, die insbesondere aus Temperaturschwankungen resultieren, kompensiert werden.

Zur Verbindung von Aufnahme 19 und Grundplatte 7 sind drei Blattfedern 31 vorgesehen. Weiterhin ist die Aufnahme 19 über ein Wärmeleitband 43 mit einem weiteren Bauteil des Satelliten verbunden. Die Haltestruktur 5 , die Grundplatte 7 umfassend, ist aus Aluminium hergestellt. Aluminium und Zerodur weisen unterschiedliche Ausdehnungskoeffizienten auf. Aufgrund von Temperaturschwankungen dehnt sich somit die Grundplatte 7 demzufolge nicht im gleichen Maß wie die Aufnahme 19 aus. Die Aufnahme 19 ist ihrerseits als kompaktes Bauteil ausgebildet, wodurch es nicht so hohen Spannungen ausgesetzt ist und somit der Einsatz von einer Keramik bzw. Zerodur, einem spröden Material, möglich ist. Über die Federelemente ist die Aufnahme 19 relativ deformierbar zur Grundplatte 7 angeordnet, wobei aufgrund von unterschiedlicher thermischer Deformation der Grundplatte 7 und der Aufnahme 19 eine Relativdeformation von Aufnahme 19 und Grundplatte 7 resultiert. Zur Lagerung der Aufnahme 19 sind drei Federn 30 vorgesehen, die einen vorbestimmten Querschnitt 22 zur Bereitstellung einer Wärmeleitung aufweisen. Dieser Querschnitt 22 ist zur begrenzten Wärmeabführung von der Aufnahme 19 ausgebildet. Durch diese wärmeisolierenden Verbindungselemente 21 kann eine gleichmäßige Temperatur der Aufnahme 19 gewährleistet werden. Durch diese Wärmestauung wird ein Temperaturgradient, falls vorhanden, abgebaut. Überschreitet die Aufnahme 19 eine vorbestimmte Temperatur, so wird über das vorgesehene Wärmeleitband 43 Wärme abgeführt. Durch eine gleichmäßige Temperatur der Aufnahme 19 werden innere Spannungen in der Aufnahme 19 verhindert, woraus ein Verziehen der Aufnahme resultieren könnte, wobei das System gerade auf Deformationen, die sich auf die Parallelität der optischen Achsen 37, 39 von Aufnahme und Sendeeinheit auswirken, . sensibel reagieren würde. Für einen Einsatz im Weltraum ist eine Formstabilität für den Temperaturbereich von ca. -40° C bis 70° erforderlich.

Im Fall der Kommunikation zweier Satelliten dürfen empfangener und ausgesendeter Strahl 32, 34 nicht voneinander abweichen. Dies bedeutet, daß z.B. die Achsen der einzelnen optischen Einheiten 3 sich nicht verändern dürfen. Bei dem dargestellten Ausführungsbeispiel wird eine kompakte Bauform mittels der Aufnahme 19, durch die mehrere optische Einheiten 3 aufgenommen sind, erreicht. Bei dem dargestellten Ausführungsbeispiel verlaufen die optischen Achsen 37, 39, 41 der optischen Einheiten 3 parallel zur Grundplatte 7. Es könnte auch vorgesehen sein die Aufnahme um 90° gedreht anzuordnen, so daß eine durch die optischen Achsen 37, 39, 41 festgelegte Ebene senkrecht zur Grundplatte 7 verläuft Dadurch ist eine Anpassung an den vorhandenen Einbauraum möglich.

### Bezugszeichenliste:

- 1: Optische Bank
- 3: Optische Einheiten
- 5: Haltestruktur
- 7: Grundplatte
- 8: Verstärkungsrippen
- 9: Flanschsegment
- 11: Durchbruch
- 13: Anschluß für optisches Element
- 15: Auflagepunkte
- 16: Umlenkspiegel
- 17: Abstützpunkte für Teleskop
- 18: Öffnung
- 19: Aufnahme
- 21: Verbindungselement
- 22: Querschnitt Wärmeleitfähigkeit
- 23: Sendeeinheit
- 25: Empfangseinheit
- 27: Umlenkspiegel
- 29: Selektiv reflektierender Spiegel
- 30: Federn
- 31: Blattfedern
- 32: Empfangenes Signal
- 33: Strahl
- 34: Gesendetes Signal
- 35: Optische Achse des Teleskops
- 37: Optische Achse der Empfangseinheit
- 39: Optische Achse der Sendeeinheit
- 41: Flächennormal des Umlenkspiegels
- 43: Wärmeleitband

## Patentansprüche

1. Optische Bank mit einer Grundplatte (7), die mit einer Aufnahme (19) in Verbindung steht und die mit einem weiteren zugeordneten Bauteil verbindbar ist, wobei die Aufnahme (19) relativ zur Grundplatte (7) in ihrer Gesamtheit deformierbar angeordnet und durch Verbindungselemente (21) mit der Grundplatte (7) verbunden ist, **dadurch gekennzeichnet, daß** die Aufnahme (19) als Hohlkörper für eine Strahlführung ausgebildet ist.

2. Optische Bank nach Anspruch 1, **dadurch gekennzeichnet, daß** die Aufnahme (19) als monolithischer Körper mit Innenbohrungen für eine Strahlführung ausgebildet ist.

3. Optische Bank nach mindestens einem der vorangegangenen Ansprüche, **dadurch gekennzeichnet, daß** die Aufnahme (19) als gehäuseartiger Hohlkörper, der mindestens eine Öffnung (18) zum Ein- und Auskoppeln von optischen Signalen (32, 34) aufweist, ausgebildet ist.

4. Optische Bank nach mindestens einem der vorangegangenen Ansprüche, **dadurch gekennzeichnet, daß** die Aufnahme (19) zur Aufnahme von mindestens zwei optischen Einheiten (3) ausgebildet ist.

5. Optische Bank nach einem vorangegangenen Ansprüche, **dadurch gekennzeichnet, daß** als Verbindungselemente (21) Blattfedern (31) vorgesehen sind.

6. Optische Bank nach mindestens einem der vorangegangenen Ansprüche, **dadurch gekennzeichnet, daß** die Aufnahme (19) über Verbindungselemente (21), die Gelenkverbindungen umfassen, mit der Grundplatte (7) verbunden ist.

7. Optische Bank nach mindestens einem der vorangegangenen Ansprüche, **dadurch gekennzeichnet, daß** die Aufnahme (19) ein Material aufweist, das ein hohes Verhältnis von Wärmeleitfähigkeit zu Wärmeausdehnungskoeffzienten aufweist.

8. Optische Bank nach mindestens einem der vorangegangenen Ansprüche, **dadurch gekennzeichnet, daß** die Grundplatte (7) dreiecksförmig mit einem mittig angeordneten Durchbruch (11) und Flanschsegmenten (9), über die die Grundplatte (7) mit einem zugeordneten Bauteil fest verbindbar ist, ausgebildet ist.

9. Optische Bank nach mindestens einem der vorangegangenen Ansprüche, **dadurch gekennzeichnet, daß** die Grundplatte (7) zur Bildung einer Haltestruktur (5) mit Verstärkungen ausgebildet ist, die vorzugsweise in Form von Rippen bereitgestellt wird und daß die Grundplatte (7) bzw. die Haltestruktur (5) mit Abstützpunkten (17) für die Ankopplung eines Teleskopes ausgebildet ist.

10. Optische Bank nach mindestens einem der vorangegangenen Ansprüche, **dadurch gekennzeichnet, daß** die Verbindungselemente (21) wärmeisolierend sind und in Abhängigkeit von ihrem Wärmeleitkoeffizient einen vorbestimmten Querschnitt zur begrenzten Wärmeabführung aufweisen.

11. Optische Bank nach mindestens einem der vorangegangenen Ansprüche, **dadurch gekennzeichnet, daß** die Aufnahme (19) mit einem Wärmeleitband (43) versehen ist, über das bei überschreiten einer vorbestimmten Temperatur Wärme abgeführt wird.

12. Optische Bank nach mindestens einem der vorangegangenen Ansprüche, **dadurch gekennzeichnet, daß** eine Empfangseinheit (25) und eine Sendeeinheit (23) mit der Aufnahme (19) fest verbunden sind.

13. Optische Bank nach mindestens einem der vorangegangenen Ansprüche, **dadurch gekennzeichnet, daß** die Grundplatte eine Haltestruktur (5) aufweist, die mit einem Anschluß (13) für eine optische Einheit, vorzugsweise mit Auflagepunkten (15) für die Aufnahme eines ansteuerbaren Umlenkspiegels (16), ausgebildet ist.

14. Optische Bank nach einem der vorangegangen Ansprüche, **dadurch gekennzeichnet, daß** die optische Bank in dem für den Einsatz im Weltraum erforderlichen Temperaturbereich von -40 bis +70°C formstabil ist.

## Claims

1. Optical bench having a baseplate (7) which is connected to a holder (19) and can be connected to a further assigned component, the holder (19) being arranged such that it can be deformed as a whole relative to the baseplate (7) and is connected to the baseplate (7) by connecting elements (21), **characterized in that** the holder (19) is designed as a holder body for beam guidance.

2. Optical bench according to Claim 1, **characterized in that** the holder (19) is designed as a monolithic body with inner bores for beam guidance.

3. Optical bench according to at least one of the preceding claims, **characterized in that** the holder (19) is designed as a housing-like hollow body which has at least one opening (18) for coupling optical signals (32, 34) in and out.

4. Optical bench according to at least one of the preceding claims, **characterized in that** the holder (19) is designed for holding at least two optical units (3).

5. Optical bench according to one of the preceding claims, **characterized in that** the springs (31) are provided as connecting elements (21).

6. Optical bench according to at least one of the preceding claims, **characterized in that** the holder (19) is connected to the baseplate (7) via connecting elements (21) which comprise articulations.

7. Optical bench according to at least one of the preceding claims, **characterized in that** the holder (19) has a material which has a high ratio of thermal conductivity to thermal expansion coefficient.

8. Optical bench according to at least one of the preceding claims, **characterized in that** the baseplate (7) is designed in the shape of a triangle having a centrally arranged gutter (11) and flange segments (9) via which the baseplate (7) can be connected permanently to an assigned component.

9. Optical bench according to at least one of the preceding claims, **characterized in that** the baseplate (7) is designed to form a holding structure (5) with reinforcements, which is preferably provided in the form of ribs, and **in that** the baseplate (7) or the holding structure (5) is designed with support points (17) for coupling on the telescope.

10. Optical bench according to at least one of the preceding claims, **characterized in that** the correcting elements (21) are thermally insulating and have a predetermined cross section for limited heat dissipation as a function of their thermal conduction coefficient.

11. Optical bench according to at least one of the preceding claims, **characterized in that** the holder (19) is provided with a thermal conduction band (43) via which heat is dissipated when a prescribed temperature is exceeded.

12. Optical bench according to at least one of the preceding claims, **characterized in that** a receiving unit (25) and a transmitting unit (23) are permanently connected to the holder (19).

13. Optical bench according to at least one of the preceding claims, **characterized in that** the baseplate has a holding structure (5) which is designed with a connection (13) for an optical unit, preferably with bearing points (15) for holding a grabable deflecting mirror (16).

14. Optical bench according to at least one of the preceding claims, **characterized in that** the optical bench is dimensionally stable in the temperature range from -40 to +70°C required for use in space.

## Revendications

1. Banc optique comportant une plaque de base (7), qui est en liaison avec un support (19) et qui peut être reliée à une autre composante associée, le support (19) étant disposé de manière déformable dans sa globalité par rapport à la plaque de base (7) et relié par des éléments de liaison (21) à la plaque de base (7), **caractérisé en ce que** le support (19) se présente sous forme d'un corps creux pour un guidage de rayons.

2. Banc optique selon la revendication 1, **caractérisé en ce que** le support (19) se présente sous forme d'un corps monolithique avec des alésages intérieurs pour un guidage de rayons.

3. Banc optique selon au moins une quelconque des revendications précédentes, **caractérisé en ce que** le support (19) est conçu sous forme d'un corps creux en forme de boîtier qui présente au moins un orifice (18) pour le couplage et le découplage de signaux optiques (32, 34).

4. Banc optique selon au moins une quelconque des revendications précédentes, **caractérisé en ce que** le support (19) est conçu pour recevoir au moins deux unités optiques (3).

5. Banc optique selon au moins une quelconque des revendications précédentes, **caractérisé en ce que** des ressorts à lames (31) sont prévus comme éléments de liaison (21).

6. Banc optique selon au moins une quelconque des revendications précédentes, **caractérisé en ce que** le support (19) est relié par des éléments de liaison (21) qui incluent des joints à articulations à la plaque de base (7).

7. Banc optique selon au moins une quelconque des revendications précédentes, **caractérisé en ce que** le support (19) est fait d'un matériau qui présente un haut rapport de conductibilité thermique par rapport à des coefficients d'extension thermique.

8. Banc optique selon au moins une quelconque des revendications précédentes, **caractérisé en ce que** la plaque de base (7) est conçue en forme de triangle avec une percée (11) disposée au centre et des segments de bride (9) grâce auxquels la plaque de base (7) peut être reliée fixement à une composante associée.

9. Banc optique selon au moins une quelconque des revendications précédentes, **caractérisé en ce que** la plaque de base (7) est conçue de manière à former une structure de retenue (5) avec des renforcements qui se présentent de préférence sous forme de cannelures et que la plaque de base (7) ou la structure de retenue (5) est conçue avec des points d'appui (17) pour l'accouplement d'un télescope.

10. Banc optique selon au moins une quelconque des revendications précédentes, **caractérisé en ce que** les éléments de liaison (21) sont isolants thermiques et présentent en fonction de leur coefficient de conductibilité thermique une section transversale prédéfinie pour l'évacuation limitée de la chaleur.

11. Banc optique selon au moins une quelconque des revendications précédentes, **caractérisé en ce que** le support (19) est pourvu d'une bande conductrice thermique (43) grâce à laquelle la chaleur est évacuée en cas de dépassement d'une température prédéfinie.

12. Banc optique selon au moins une quelconque des revendications précédentes, **caractérisé en ce qu'**une unité réceptrice (25) et une unité émettrice (23) sont reliées fixement au support (19).

13. Banc optique selon au moins une quelconque des revendications précédentes, **caractérisé en ce que** la plaque de base présente une structure de retenue (5) qui est conçue avec un raccordement (13) pour une unité optique, de préférence avec des points d'appui (15) destinés à recevoir un miroir déviateur (16) pouvant être commandé.

14. Banc optique selon au moins une quelconque des revendications précédentes, **caractérisé en ce que** le banc optique est d'une forme stable dans la plage de température de -40 à +70°C requise pour un usage dans l'espace.
